Europäisches Patentamt

European Patent Office

Office européen des brevets

(11) Publication number: **0 411 506 A2**

## EUROPEAN PATENT APPLICATION

(21) Application number: **90114491.5**

(51) Int. Cl.5: **C01B 3/56, B01D 53/04**

(22) Date of filing: **27.07.90**

(30) Priority: **02.08.89 US 389385**

(43) Date of publication of application:
**06.02.91 Bulletin 91/06**

(84) Designated Contracting States:
**BE DE ES FR GB IT NL**

(71) Applicant: **AIR PRODUCTS AND CHEMICALS, INC.**
**7201 Hamilton Boulevard**
**Allentown, PA 18195-1501(US)**

(72) Inventor: **Roden, Thomas Michael**

**212 W. Chestnut Street**
**Macungie, PA 18062(US)**
Inventor: **Nicholas, David Michael**
**RD. 2 Box 2736, Run Road**
**New Tripoli, PA 18066(US)**
Inventor: **Dimartino, Stephen Paul, Sr.**
**29 South Herbein Drive**
**Topton, PA 19562(US)**

(74) Representative: **Kador & Partnerner**
**Corneliusstrasse 15**
**D-8000 München 5(DE)**

(54) **Production of hydrogen, carbon monoxide and mixtures thereof.**

(57) Synthesis gas comprising hydrogen and carbon monoxide is produced from a raw, partially dehydrated synthesis gas by removing carbon dioxide and residual water in a pressure swing adsorption (PSA) system wherein regeneration is effected by purging with essentially pure methane. Purge effluent comprising $CO_2$ and methane is recycled as feed to the raw synthesis gas generation process. In another embodiment, purified synthesis gas so generated is separated cryogenically into individual hydrogen and carbon monoxide products, and reject gas from the cryogenic separation step also is used for purging said PSA system with purge effluent being recycled as feed to the synthesis gas generation process. In a further embodiment, raw synthesis gas is subjected to water gas shift, and $CO_2$ and residual water are removed in a PSA system yielding a hydrogen product. The PSA system is purged with methane and the purge effluent is recycled to the synthesis gas generator as fuel.

FIG. 1

# PRODUCTION OF HYDROGEN, CARBON MONOXIDE, AND MIXTURES THEREOF

## TECHNICAL FIELD

The present invention reiates to methods for the production of hydrogen, carbon monoxide, and mixtures thereof as synthesis gas. The invention reiates particularly to the integrated separation and recovery of such products from gas mixtures.

## BACKGROUND OF THE INVENTION

The commercial production of hydrogen, carbon monoxide, and mixtures thereof (defined herein as synthesis gas) can be carried out by a number of known processes. The first step in each of these processs is the production of a mixture typically comprising hydrogen, carbon monoxide, carbon dioxide, water, methane and other light hydrocarbons, and inert gases such as nitrogen and argon. Such a gas mixture, which is defined herein as raw synthesis gas, can be produced from a number of different hydrocarbon feedstocks including coal, lignite, various petroleum fractions ranging from naphtha to heavy oils, and from light hydrocarbons.

One of the most widely used methods to produce such synthesis gas mixtures is steam reforming or autothermal reforming of light hydrocarbons, particularly methane and other light hydrocarbons typically present in natural gas. Other methods include the gasification or partial oxidation of heavier liquid and solid hydrocarbons such as those previously stated.

The separation and recovery of hydrogen, carbon monoxide, or synthesis gas from such raw synthesis gas mixtures, or from such mixtures wherein carbon monoxide has been conberted to additional hydrogen and $CO_2$ by the water gas shift reaction, involve energy-intensive and expensive process operation. In particular, the removal of carbon dioxide is especially costly, since typical raw synthesis gas mixtures (for example from steam-methane reforming) can contain $CO_2$ concentrations in the general range of 10 to 20 volume % on a dry basis.

$CO_2$ can be removed from such streams by a number of conventional methods. Among these are hot alkali scrubbing with solutions of potassium carbonate, chemical absorption by reactive amine-based solvents such as monoethanol amine (MEA) or diethanol amine (DEA), physical absorption under pressure by solvents such as methanol or mixtures of ethers, and low-temperature distillation. Such methods are capital and/or energy intensive; hot alkali scrubbing and amine-based absorption processes, for example, use particularly large amounts of high-level process heat for absorbent regeneration.

Physical adsorption processes also have been disclosed for removal of $CO_2$ from such streams. Such pressure swing adsorption (PSA) processes have certain economic and energy-saving advantages in the removal of $CO_2$ and other contaminants from process streams involved in the production of hydrogen, carbon monoxide, and synthesis gas. PSA processes can be integrated very efficiently into overall process flowsheets for production of these products. In particular, PSA systems do not require the large amounts of process heat required by chemical absorption processes.

Hydrogen and carbon monoxide are generally separated and initially purified to yield individual products by means of cryogenic separation. In this well-known process, high-purity carbon monoxide and medium-purity hydrogen are produced along with a reject stream comprising these components and impurities such as methane and other low-boiling components.

One conventional process scheme for producing synthesis gas involves the steps of steam reforming of natural gas, cooling, and removal of bulk $CO_2$ by MEA absorption. If individual hydrogen and carbon monoxide products are desired, the synthesis gas product is subjected to cryogenic separation to yield high purity carbon monoxide and a hydrogen product which is further purified by a final PSA system. A commercially-practiced method for the production of hydrogen involves the steps of steam reforming of natural gas, one or more stages of water gas shift conversion to convert carbon monoxide into hydrogen and $CO_2$, bulk $CO_2$ removal by MEA absorption, and final hydrogen purification by PSA. Methanation to convert residual carbon monoxide to methane is an optional known step.

The removal of $CO_2$ from raw synthesis gas is an important but costly step in the production of hydrogen, carbon monoxide, and synthesis gas. The use of less energy-intensive methods for $CO_2$ removal known in the art, such as pressure swing adsorption, can be advantageous in the economical manufacture of these gas products.

U.S. Patent No. 3,221,416 discloses a two-bed pressure swing adsorption (PSA) system for purification of hydrogen in which each bed comprises at least three zones operated at different, decreasing temperatures. The system is subjected to the steps of adsorption, stepwise depressurization, purge, and stepwise repressurization. The purge gas used can be either purified PSA product hydrogen or gas from another, separate source.

U.S. Patent No. 3,838,553 discloses a process for the separation of a low-boiling gas such as hydrogen or helium from a mixed gas stream. One embodiment involves subjecting the mixed gas stream to a low-temperature separation step in which a low-boiling gas component is recovered, followed by further purification of the low-boiling gas by pressure swing adsorption (PSA). The reject stream from regeneration of the PSA system is recycled for further treatment in the low-temperature separation step. In an alternate embodiment, the mixed gas stream is first treated in a PSA system for removal of impurities from the desired low-boiling gas component product. The reject stream from the PSA system is subjected to a low-temperature separation step to remove heavier components and the stream rich in the desired low-boiling component is recycled to the PSA system for additional recovery.

U.S. Patent No. 3,986,849 discloses a single-stage pressure swing adsorption process having from seven to ten multiple parallel adsorbers operating in cyclic fashion for the purification of hydrogen. The disclosed adsorption cycles are improvements on those disclosed in earlier U.S. Patents Nos. 3,430,418 and 3,564,816. In one disclosed embodiment, ten adsorbent beds are used and each is subjected to the steps of adsorption, equalization/depressurization (in three steps), co-current depressurization, countercurrent blowdown, purge with product gas, repressurization (in three steps by successive interconnection with each of three other beds undergoing depressurization), and final repressurization. This embodiment is utilized in one example (at column 9, line 13) for the recovery of high purity hydrogen from a feed gas comprising by volume 77.1% $H_2$, 22.5% $CO_2$, 0.35% carbon monoxide, and 0.013% methane.

U.S. Patent No. 4,077,779 discloses a pressure swing adsorption process useful for the removal of $CO_2$ and/or hydrocarbon impurities from hydrogen to obtain high recovery of hydrogen at high purity. The process is carried out cyclically in one adsorption stage comprising multiple adsorbers in parallel, in which each adsorber is charged with an adsorbent selective for $CO_2$ and hydrocarbon impurities. Each adsorber undergoes a sequence of steps comprising: (a) adsorption; (b) rinse with previously collected components ($CO_2$ and/or hydrocarbons); (c) pressure reduction during which the absorbed components are withdrawn for use in another rinse step or as a secondary product; (d) purging with an extraneous, less strongly adsorbed gas which further desorbs the adsorbed components; (e) evacuation to remove the extraneous gas and remaining components; and (f) repressuring the adsorber with hydrogen product. The process in certain cases also can recover the impurity component(s) at high purity, that is, essentially free of hydrogen.

U.S. Patent No. 4,375,363 discloses an improved version of previously-cited U.S. Patent No. 3,986,849 wherein several embodiments of disclosed pressure swing adsorption cycles are described for the removal of impurities such as $CO_2$, carbon monoxide, and methane from a typical shifted hydrocarbon/steam reformer or partial oxidation unit product gas and for the simultaneous production therefrom of hydrogen-nitrogen mixtures for ammonia synthesis. The improvement comprises the use of nitrogen from an external source for the previously-cited steps of purging and/or repressurization. By controlling the duration and pressure of the cycle steps, a hydrogen-nitrogen mixture of the desired composition is produced. U.S. Patent No. 4,414,191 discloses an integrated ammonia synthesis process which uses the pressure swing adsorption process disclosed in the cited U.S. Patent No. 4,375,363. An improvement to the PSA process for supplying ammonia synthesis gas as described in the above-cited U.S. Patent Nos. 4,375,363 and 4,414,191 is disclosed in U.S. Patent No. 4,475,929 (at line 9, column 12, et seq), in which the high-pressure, cocurrent purge step following the adsorption step utilizes methane rather than nitrogen as the purge gas. The use of methane is disclosed to be preferable to nitrogen for purging when a high BTU purge effluent is desired for use as fuel.

U.S. Patent No. 4,553,981 discloses an integrated process for the production of hydrogen comprising the steps of (a) producing a raw synthesis gas by steam-methane reforming, partial oxidation, or coal gasification; (b) cooling the gas and converting most of the contained carbon monoxide into hydrogen and $CO_2$ by catalytic water gas shift; (c) removing the bulk of the $CO_2$ from the gas by a conventional chemical scrubbing process; (d) removing the remaining $CO_2$ and other impurities in a PSA system to produce a high-purity hydrogen product; and (e) compressing and recycling at least 40% of the PSA waste stream to the shift conversion and/or raw synthesis gas production steps.

U.S. Patent No. 4,726,816 discloses an integrated process for the production of carbon monoxide comprising the steps of (a) producing a raw synthesis gas by steam reforming of hydrocarbons; (b)

3

recovering carbon monoxide from the synthesis gas by pressure swing adsorption; and (c) recycling a $CO_2$-rich PSA reject stream to the reformer for further reaction with hydrocarbons. The PSA system used in step (b) is disclosed in U.S. Patent No. 4,512,780 cited earlier.

U.S. Patent No. 4,732,596 discloses an integrated process for producing high purity hydrogen and carbon monoxide from a raw synthesis gas stream comprising hydrogen, carbon monoxide, and carbon dioxide, typically obtained by steam-methane reforming. In the disclosed process, water and $CO_2$ are removed from the raw synthesis gas stream, after cooling and partial dehydration, by means of a first pressure swing adsorption system. The PSA product comprising hydrogen and carbon monoxide is cryogenically fractionated into high-purity carbon monoxide and a hydrogen product which is further purified in a second, conventional, PSA to yield a high-purity hydrogen product. In one embodiment, reject gas from the cryogenic separation step and reject gas from the first PSA system are recycled as feed to the process supplying the raw synthesis gas, and reject gas from the second PSA system is used for purging in the first PSA system. In another embodiment, reject gas from the cryogenic separation step is used for purging in the first PSA system, and reject gas from the second PSA system is recycled as feed to the process supplying the raw synthesis gas and some hydrogen product is also used for purging in the first PSA system. The first PSA system as disclosed in the cited patent comprises six parallel beds containing an adsorbent selective for $CO_2$ and water, each bed of which undergoes in a cyclic manner the steps of (a) adsorption, in which $CO_2$ and water are selectively removed and a purified stream comprising hydrogen and carbon monoxide is discharged; (b) four pressure equalizations at successively lower pressures, in which the bed is successively interconnected with a first other bed undergoing repressurization, a first storage tank at a lower pressure, a second other bed undergoing repressurization, and a second storage tank at a still lower pressure; (c) depressurization or blowdown; (d) purge by either reject gas from the second PSA system or by a mixture of hydrogen product and reject as from the cryogenic separation step, whereby water and $CO_2$ are desorbed; (e) four equalization repressurization steps at successively higher pressures, in which the bed is successively interconnected with a first other bed undergoing depressurization, a second storage tank at a higher pressure, a third other bed undergoing depressurization, and a first storage tank at a higher pressure; and (f) repressurization with the purified hydrogen/carbon monoxide mixture.

U.S. Patent No. 4,761,167 discloses a method to recover methane from a fuel gas stream also containing nitrogen and carbon dioxide. $CO_2$ is first removed from the gas stream by selective adsorption in a PSA system, followed by cryogenic fractionation of the $CO_2$-free stream to separate methane and nitrogen. The disclosed PSA system in one embodiment comprises four parallel adsorbers each of which is subjected in turn to the steps of adsorption, depressurization, purge with nitrogen product from cryogenic fractionation, and repressurization with PSA product. In another embodiment, five parallel adsorbers are utilized, and a $CO_2$ rinse step is employed after the adsorption step to increase recovery of methane. A unique feature in the disclosed process is the use of nitrogen from the cryogenic fractionation system to purge and regenerate the $CO_2$-laden adsorbers in the PSA system.

Japanese Patent No. 62036003 discloses a PSA system for the removal of $CO_2$ from a hydrogen-$CO_2$ mixture made by methanol reforming. In this PSA process, the purge step uses nitrogen from an external source, rather than product hydrogen, to remove adsorbed components. When nitrogen purge is used, a hydrogen recovery of 79% is realized compared with a 74% recovery when hydrogen product purge is used.

## SUMMARY OF THE INVENTION

A process is disclosed for the production of hydrogen, carbon monoxide, or combinations thereof from a feed gas mixture containing hydrogen, carbon monoxide, carbon dioxide, water, and optionally one or more additional components as impurities, wherein carbon dioxide and water are removed from the feed gas mixture by passing the mixture at a superatmospheric pressure into and through a first bed of adsorbent which selectively adsorbs carbon dioxide and water, withdrawing from the bed a hydrogen-containing gas which is essentially free of water and carbon dioxide, purging the first bed of adsorbent with a stream of essentially pure methane at a pressure lower than the feed pressure so that adsorbed components are desorbed, and withdrawing from the bed a first purge effluent stream containing methane, void space gas, and desorbed components.

In one embodiment, the feed gas mixture is obtained by steam methane reforming of desulfurized natural gas, the resulting raw synthesis gas is cooled and dehydrated, and essentially all carbon dioxide and residual water are removed by pressure swing adsorption to yield a hydrogen-carbon monoxide synthesis gas product. Adsorbent beds in the pressure swing adsorption system are purged with essentially pure methane to desorb carbon dioxide and water, and at least a portion of the purge effluent is recycled as feed to the steam methane reformer.

In an alternate embodiment, the hydrogen-carbon monoxide synthesis gas is further separated by cryogenic fractionation into a high-purity carbon monoxide product and a hydrogen product. A reject stream from the cryogenic fractionation system is used, in addition to essentially pure methane, to purge the pressure swing adsorption system for desorption of carbon dioxide and water, and at least a portion of the purge effluent is recycled as feed to the steam methane reformer.

In a third embodiment, raw synthesis gas is subjected to catalytic water gas shift to convert carbon monoxide to additional hydrogen and carbon dioxide. Carbon dioxide and residual water are removed by pressure swing adsorption to yield a high-purity hydrogen product, and the adsorbent beds are purged with essentially pure methane to desorb carbon dioxide and water. Purge effluent is recycled as fuel to the steam methane reformer.

High-purity methane for purging and regeneration of $CO_2$-laden adsorbent in the three embodiments can be obtained from natural gas which is treated by adsorption to remove sulfur compounds, water, carbon dioxide, and hydrocarbons heavier than methane. Alternately, high-purity methane can be obtained by vaporization of liquefied natural gas (LNG) in which case adsorption treatment is not required.

## BRIEF DESCRIPTION OF THE DRAWINGS

Figure 1 is a schematic flow diagram illustrating a process according to the present invention for producing high-purity synthesis gas comprising hydrogen and carbon monoxide.

Figure 2 is a schematic flow diagram illustrating a process according to the present invention wherein high-purity synthesis gas is further separated into individual carbon monoxide and hydrogen products.

Figure 3 is a schematic flow diagram illustrating a process according to the present invention wherein raw synthesis gas is shifted prior to $CO_2$ removal by PSA to produce a high-purity hydrogen stream.

Figures 4 and 5 are process flow diagrams for the $CO_2$ removal PSA systems and the natural gas pretreatment PSA system for the three alternative embodiments.

## DETAILED DESCRIPTION OF THE INVENTION

According to the present invention, synthesis gas containing hydrogen and carbon monoxide is produced from a raw synthesis gas obtained from any available hydrocarbon conversion process. In this description of the invention, steam-methane reforming of natural gas is utilized for this purpose. Other processes which can be utilized include autothermal reforming or partial oxidation of hydrocarbons. In an alternate embodiment, high purity synthesis gas is further separated into individual hydrogen and carbon monoxide products. In a third embodiment, raw synthesis gas is shifted to convert carbon monoxide to additional hydrogen and carbon dioxide, and a high purity hydrogen product is produced.

A common feature of the three embodiments is the removal of $CO_2$ and residual water from the raw syntheses gas by pressure swing adsorption, wherein regeneration of the $CO_2$-laden adsorbent is effected by purging with high-purity methane. In one embodiment, a reject stream from the cryogenic fractionation system is also used for the purge step. For all three embodiments, the purge gas effluent from regeneration of the $CO_2$ adsorbers is recycled to the synthesis gas generator as either feedstock or fuel. The three embodiments of the present invention will now be described in detail.

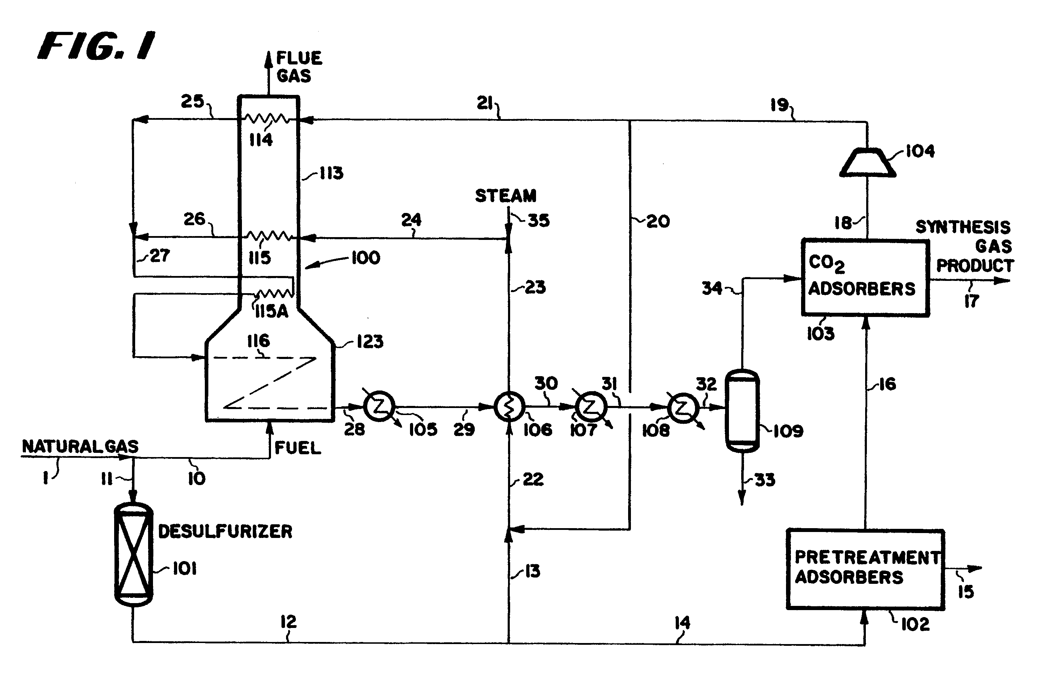

In the first embodiment, referring now to Figure 1, a natural gas feedstream 1 is split into two streams 10 and 11. Stream 10 is fed as fuel to steam-methane reforming unit 100. Stream 11 is passed to desulfurizer unit 101 wherein any sulfur-containing impurities in the natural gas are removed, for example by adsorption on activated carbon or zinc oxide to yield desulfurized natural gas stream 12. A portion of stream 12, stream 13, is combined with recycle stream 20, which contains $CO_2$ and methane, and combined stream 22 is heated in heat exchanger 106 by heat exchange with high-temperature process stream 29. The now-heated stream 23 is mixed with process steam stream 35, and the combined stream 24 is further heated in heating coil 115 in convection section 113 of steam-methane reforming unit 100. The heated stream 26 is then combined with recycle stream 25 which contains methane and $CO_2$ and the resulting stream 27, after further heating to about 1000°F in heating coil 115A, is passed through catalytic reformer reactor 116 in reaction section 123 of steam-methane reformer 100 and exits at a temperature between about 1,550° and 1,750° F. The reactor effluent stream 28, now comprising hydrogen, carbon monoxide, and water in addition to methane and carbon dioxide, is cooled in waste heat boiler 105, and is further cooled by heat exchange with feed stream 22 in exchanger 106. The resulting stream 30 is then further cooled against boiler feedwater in exchanger 107, the resulting stream 31 is cooled against cooling water in exchanger 108, and the resulting stream 32 then passes into separator 109, where water condensate 33 is removed. Stream 34, which is saturated with water at a temperature of about 90° to 120° F and a pressure of about 200 to 300 psia, then flows to $CO_2$ pressure swing adsorption (PSA) system 103 where essentially all $CO_2$ and essentially all residual water are selectively adsorbed to yield synthesis gas product 17 which is typically 95 vol % hydrogen plus CO with the remainder being methane.

The second portion of desulfurized natural gas, stream 14, is passed through pretreatment PSA system 102 in which any water, $CO_2$, or hydrocarbons heavier than methane are removed by selective adsorption and are rejected with some methane as stream 15, which can be used as fuel. If high-purity methane is obtained from the vaporization of liquefied natural gas, PSA system 102 is not needed. Essentially pure methane stream 16 then passes to $CO_2$ PSA system 103 where it is used to regenerate the $CO_2$-laden adsorbent by purging at a pressure lower than that of the adsorption step, which typically runs between about 200 and 300 psig. The resulting purge effluent stream 18, which typically would be in the range of about 40 to 70 vol. % $CO_2$, is compressed in compressor 104, and the compressed stream 19 is split into two streams 20 and 21. Stream 20 is mixed with desulfurized natural gas stream 13 and stream 21 is heated in heating coil 114, and the heated stream 25 is combined with feedstream 26 to form the total feed for steam methane reformer 100. Table 1 gives flow rates, compositions, and typical pressures and temperatures for a computer process simulation of the first embodiment described above and in Figure 1.

TABLE 1

| Flowrates, Pressures, and Temperatures For Selected Key Streams in Figure 1 (Embodiment 1) | | | | | | | | |
|---|---|---|---|---|---|---|---|---|
| Stream Number | 34 | 18 | 17 | 27 | 28 | 12 | 16 | 1 |
| Components (# moles/hr) | | | | | | | | |
| Methane | 28.3 | 95.9 | 58.6 | 323.8 | 28.3 | 355.5 | 126.1 | 237.5 |
| Ethane | -- | -- | -- | 11.5 | -- | 12.6 | -- | 8.4 |
| Propane | -- | -- | -- | 1.9 | -- | 2.0 | -- | 1.4 |
| Butane | -- | -- | -- | 0.8 | -- | 0.9 | -- | 0.6 |
| Pentane | -- | -- | -- | 0.3 | -- | 0.3 | -- | 0.2 |
| Hexane | -- | -- | -- | 0.3 | -- | 0.3 | -- | 0.2 |
| Hydrogen | 988.1 | -- | 988.1 | -- | 988.1 | -- | -- | -- |
| Carbon Monoxide | 313.4 | -- | 313.4 | -- | 313.5 | -- | -- | -- |
| Carbon Dioxide | 194.7 | 194.7 | -- | 178.5 | 195.5 | 3.2 | -- | 2.1 |
| Nitrogen | 1.3 | -- | 1.3 | 1.3 | 1.3 | 1.4 | -- | 1.2 |
| Water | 6.4 | 6.4 | -- | 1131.4 | 784.0 | -- | -- | -- |
| Total Flow | 1532.3 | 297.0 | 1361.4 | 1649.8 | 2310.7 | 376.3 | 126.1 | 251.6 |
| Pressure (psia) | 238 | 238 | 238 | 284 | 255 | 302 | 302 | 20 |
| Temperature (°F) | 100 | 95 | 100 | 1022 | 1625 | 100 | 100 | 100 |

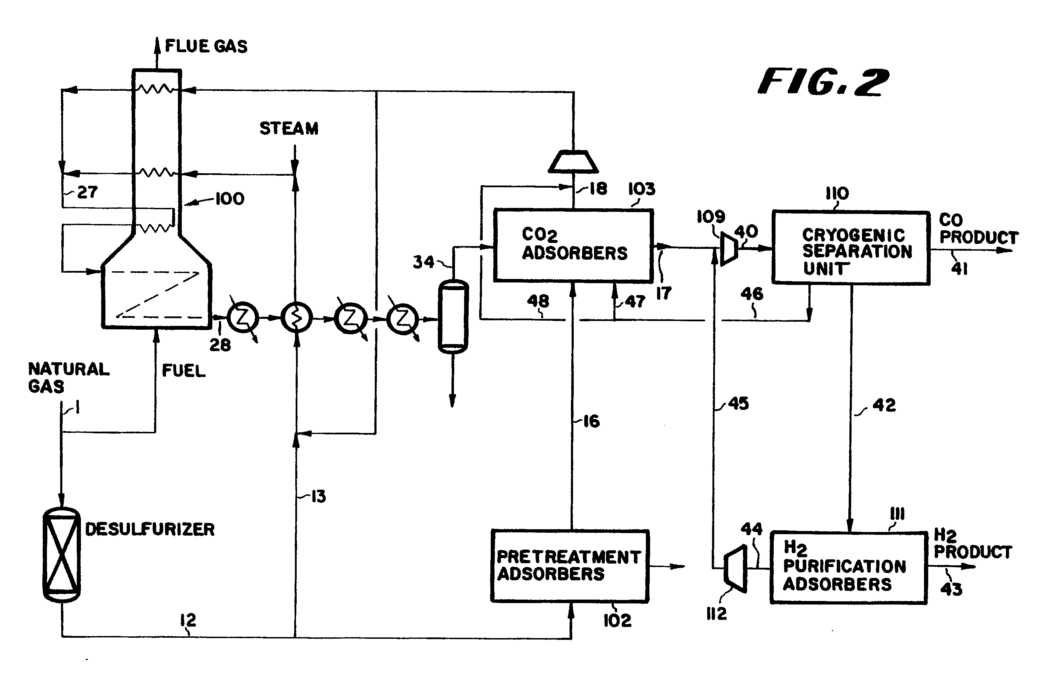

In the second embodiment of the invention, as shown schematically in the flowsheet of Figure 2, the reformer 100 and PSA systems 102 and 103 operate in essentially the same manner as in the first embodiment described above. The resulting synthesis gas stream 17 now at a pressure between about 200 and 300 psig and a temperature between about 90° and 120° F, is mixed with recycle stream 45, compressed in compressor 109, and sent to cryogenic fractionation unit 110 operating at a temperature between about -320° and -250° F which separates combined stream 40 into a high-purity CO product 41, an intermediate hydrogen product 42, and a reject stream 46 containing methane and carbon monoxide. A portion of reject stream 46 is used as stream 47 (in addition to high-purity methane) for purging $CO_2$ PSA system 103. A typical purge effluent stream 18 would be 23 vol % methane, 10% hydrogen, 18% carbon monoxide, and 47% $CO_2$. The remainder of reject stream 46, stream 48, is combined with purge effluent stream 18 for recycle to the synthesis gas generation step. Intermediate hydrogen stream 42, which typically could contain about 2 vol % impurities (mostly carbon monoxide), is sent to hydrogen PSA system 111 for further purification yielding high-purity hydrogen product 43 and waste stream 44, which is compressed in compressor 112. The compressed stream 45 is recycled to mix with the compressed synthesis gas stream and as stream 40 is fed to cryogenic fractionation unit 110. Table 2 summarizes compositions, flow rates, pressures and temperatures for key streams for a computer process simulation of a typical application of this embodiment.

TABLE 2

| Stream Number | 46 | 41 | 42 | 44 | 12 | 27 | 28 | 16 | 13 | 34 | 17 | 43 | 18 | 1 |
|---|---|---|---|---|---|---|---|---|---|---|---|---|---|---|
| Components (# moles/hr) | | | | | | | | | | | | | | |
| Methane | 86.4 | 0.6 | -- | -- | 279.9 | 315.0 | 36.6 | 70.0 | 209.9 | 36.6 | 34.8 | -- | 105.1 | 223.0 |
| Ethane | -- | -- | -- | -- | 10.0 | 7.5 | -- | -- | 7.5 | -- | -- | -- | -- | 7.9 |
| Propane | -- | -- | -- | -- | 1.6 | 1.2 | -- | -- | 1.2 | -- | -- | -- | -- | 1.3 |
| Butane | -- | -- | -- | -- | 0.7 | 0.5 | -- | -- | 0.5 | -- | -- | -- | -- | 0.5 |
| Pentane | -- | -- | -- | -- | 0.3 | 0.2 | -- | -- | 0.2 | -- | -- | -- | -- | 0.2 |
| Hexane | -- | -- | -- | -- | 0.2 | 0.2 | -- | -- | 0.2 | -- | -- | -- | -- | 0.2 |
| Hydrogen | -- | 0.1 | 1033.8 | 143.7 | -- | 46.9 | 936.1 | -- | -- | 936.1 | 889.3 | 890.1 | 10.2 | -- |
| Carbon Monoxide | 86.4 | 300.9 | 21.6 | 21.6 | -- | 84.9 | 386.4 | -- | -- | 386.4 | 367.0 | -- | 85.0 | -- |
| Carbon Dioxide | -- | -- | -- | -- | 2.5 | 218.0 | 217.5 | -- | 1.9 | 216.8 | -- | -- | 216.8 | 2.0 |
| Nitrogen | -- | 1.1 | 0.5 | 0.5 | 1.1 | 1.1 | 1.1 | -- | 0.8 | 1.1 | 1.0 | -- | 0.1 | 1.1 |
| Water | -- | -- | -- | -- | -- | 970.8 | 670.4 | -- | -- | 6.7 | -- | -- | 6.7 | -- |
| Total Flow | 172.8 | 302.7 | 1055.8 | 165.8 | 296.3 | 1646.2 | 2248.1 | 70.0 | 222.2 | 1583.6 | 1292.2 | 890.1 | 460.4 | 236.3 |
| Pressure (psia) | 305 | 65 | 225 | 20 | 290 | 284 | 255 | 290 | 290 | 238 | 233 | 225 | 20 | 564 |
| Temp.($^{o}$F) | 37 | 100 | 80 | 100 | 100 | 1022 | 1625 | 100 | 100 | 100 | 105 | 80 | 78 | 100 |

Flowrates, Pressures, and Temperatures For Selected Key Streams in Figure 2 (Embodiment 2)

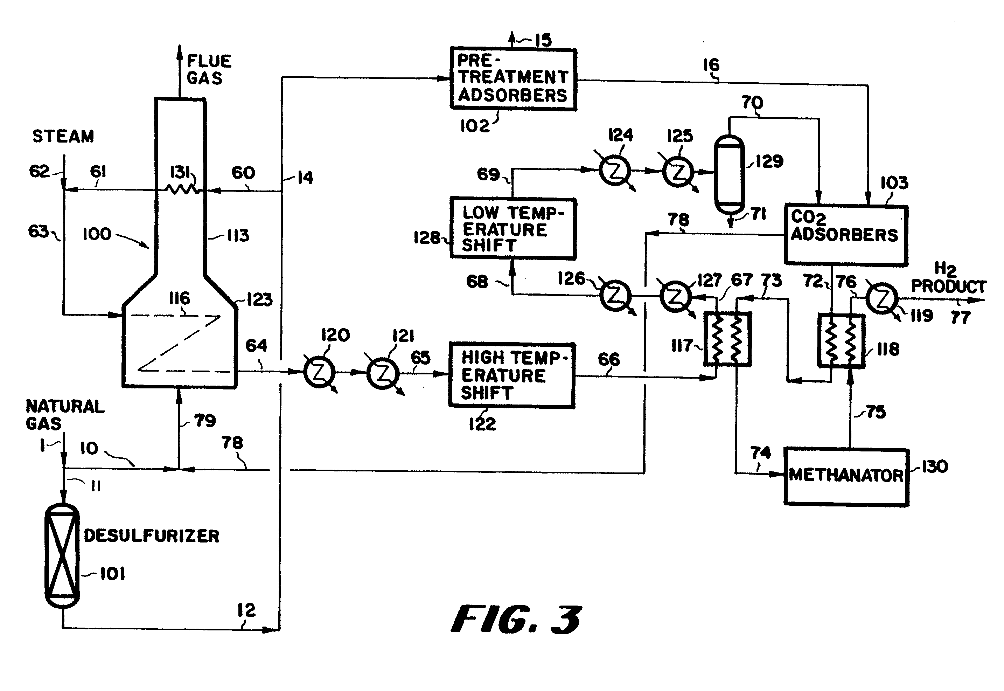

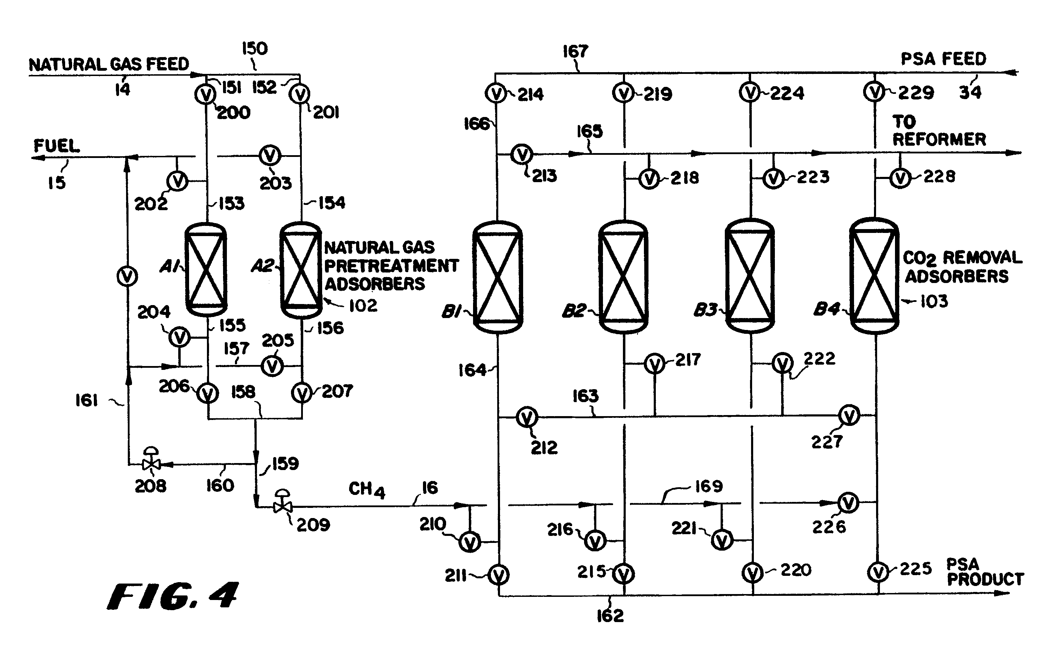

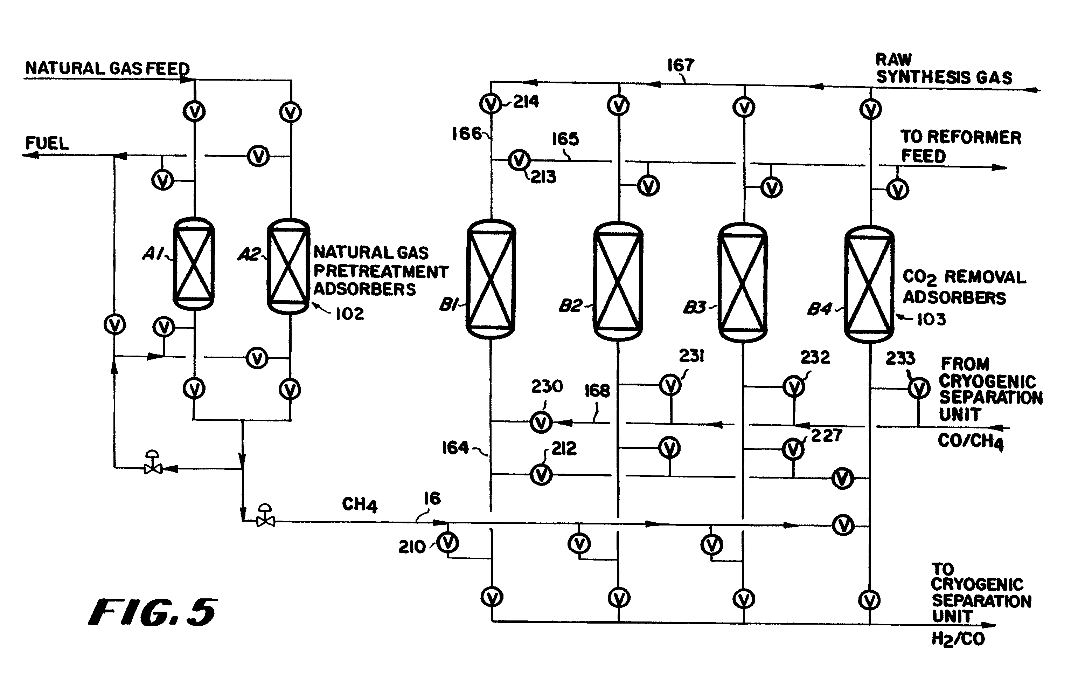

The third embodiment of the present invention is illustrated schematically in the flowsheet of Figure 3. In this embodiment, the operation of steam-methane reformer 100 is similar to the operation in the first two embodiments except that the composition of raw synthesis stream 64 is higher in hydrogen and lower in carbon monoxide for the third embodiment. This is because, as will be discussed later, there is no waste or reject stream recycle to feed as is the case of the first and second embodiments described earlier.

Referring now to Figure 3, natural gas stream 1 is split into two streams; stream 10 is mixed with recycle stream 78 and the combined stream 79 is fired as fuel to steam-methane reformer 100. Natural gas stream 11 is passed to desulfurizer 101 wherein any sulfur-containing impurities are removed, for example by adsorption on activated carbon or zinc oxide, to yield desulfurized natural gas stream 12. This stream is then split into two streams; the first, stream 60, is heated in at least one heating coil 131 in convection section 113 of steam-methane reformer 100, the resulting heated stream 61 mixed with process steam stream 62, and the resulting combined stream 63 is fed to catalytic reforming reactor 116 in reforming section 123 of steam-methane reformer 100. Raw synthesis gas 64 at a pressure of about 300 to 400 psig and a temperature of about $1,500°$ to $1,600°$ F is cooled in waste heat boiler 120 and against boiler feed water in exchanger 121, and cooled stream 65 passes to high temperature catalytic shift reactor 122 wherein carbon monoxide reacts with steam over an iron-chrome impregnated alumina catalyst at about $850°$ F to produce hydrogen and carbon dioxide. Shifted stream 66 is cooled against another process stream in exchanger 117, and is further cooled against boiler feed water in exchangers 127 and 126 before passing as stream 68 to low temperature shift reactor 128. In reactor 128, most of the remaining carbon monoxide reacts with steam over a copper-nickel impregnated alumina catalyst at a temperature of about $500°$ F to produce additional hydrogen and $CO_2$. Further shifted stream 69 is cooled against boiler feedwater in exchangers 124 and 125, and condensed water is removed in separator 129 as stream 71. Essentially dehydrated stream 70, which typically contains about 20 vol% $CO_2$, is sent to $CO_2$ PSA system 103 where essentially all $CO_2$ and residual water are removed by selective adsorption, and intermediate hydrogen product stream 72 is produced. This stream typically contains less than about 0.5 vol% CO and may contain a trace amount of $CO_2$ up to about 100 ppmv.

Desulfurized natural gas stream 14 is further treated in PSA unit 102 in which any water, $CO_2$, or hydrocarbons heavier than methane are removed by selective adsorption and are rejected with some methane as stream 15, which can be used as fuel. If high-purity methane is obtained from the vaporization of liquefied natural gas, PSA system 102 is not needed. Essentially pure methane stream 16 is used in $CO_2$ PSA system 103 to regenerate the $CO_2$-laden adsorbent by purging at a pressure lower than that of the adsorption step, which typically operates between about 300 and 400 psig. The resulting purge effluent stream 78, which would typically contain about 80% $CO_2$ and the rest methane and hydrogen, is recycled for use as fuel in steam-methane reformer 100. This purge stream 78 is recycled as fuel, rather than as process feed in the first two embodiments previously discussed, in order to maximize the hydrogen content of reformer effluent stream 64. Because purge stream 78 has a high $CO_2$ content which if recycled to feed would yield in a higher carbon monoxide content of reformer effluent 64, it is more advantageous to use purge stream 78 as fuel in this third embodiment.

Referring again to Figure 3, intermediate hydrogen product stream 72 optionally is heated against final hydrogen product in heat exchanger 118 and optionally is heated further against high temperature shift effluent 66 in exchanger 117. Heated stream 74 then passes optionally to methanator 130 wherein residual carbon monoxide, and if present carbon dioxide, are catalytically reacted with hydrogen over a nickel-impregnated alumina catalyst at about $500°-700°$ F to form methane and water. Hydrogen stream 75 now free of carbon oxides is cooled against $CO_2$ PSA system effluent 72 in heat exchanger 118, and is further cooled in cooler 119 to yield final carbon monoxide-free hydrogen product 77. For applications in which small amounts of CO and $CO_2$ impurities in the hydrogen product are acceptable, methanation step 130 is not necessary and stream 72 can be taken directly as hydrogen product. Table 3 summarizes compositions, flowrates, pressures, and temperatures for key streams for a computer process simulation of a typical application of this embodiment as described in Figure 3.

TABLE 3

| Flowrates, Pressures, and Temperatures For Selected Key Streams in Figure 3 (Embodiment 3) | | | | | | | | | |
|---|---|---|---|---|---|---|---|---|---|
| Stream Number | 60 | 63 | 64 | 70 | 72 | 77 | 11 | 16 | 78 |
| Components (# moles/hr) | | | | | | | | | |
| Methane | 305.1 | 305.1 | 9.8 | 9.8 | 56.0 | 59.4 | 227.0 | 105.0 | 58.8 |
| Ethane | 0.3 | 0.3 | -- | -- | -- | -- | 0.2 | -- | -- |
| Hydrogen | -- | -- | 1048.1 | 1179.8 | 1168.1 | 1157.9 | -- | -- | 3.2 |
| Carbon Monoxide | -- | -- | 135.3 | 3.4 | 3.4 | -- | -- | -- | -- |
| Carbon Dioxide | 1.2 | 1.2 | 161.9 | 291.3 | -- | -- | 0.9 | -- | 291.3 |
| Nitrogen | 2.5 | 2.5 | 2.5 | 2.5 | 2.5 | 2.5 | 1.8 | -- | -- |
| Water | -- | 1987.1 | 1530.5 | 5.4 | -- | 3.4 | -- | -- | 5.4 |
| Total Flow | 309.1 | 2296.2 | 2888.0 | 1492.2 | 1229.9 | 1223.1 | 230.0 | 105.0 | 367.6 |
| Pressure (psia) | 377 | 367 | 315 | 282 | 20 | 261 | 50 | 20 | 20 |
| Temperature (°F) | 30 | 905 | 1600 | 100 | 101 | 169 | 33 | 100 | 100 |

Turning now to the pressure swing adsorption systems described earlier, a detailed description of these systems and their methods of operation will be given. Figure 4 is a process flow diagram of PSA systems 102 and 103 as utilized in the embodiment of Figure 1. When natural gas is the available source of methane, PSA system 102 treats the natural gas to provide high purity methane for the purging regeneration of the adsorbers in PSA system 103. The operation of PSA system 102 when used is common to all three embodiments of the present invention. Alternately, if high-purity methane is obtained from the vaporization of liquefied natural gas, PSA system 102 is not required.

In PSA system 102, two parallel beds of adsorbent selective for $CO_2$, water, and hydrocarbons heavier than methane are arranged as shown in Figure 4, beds A1 and A2. Each bed undergoes in turn the steps summarized in Table 4. Desulfurized natural gas 14 enters manifold 150, line 151, and valve 200, and line 153, and passes into and through bed A1. $CO_2$, water (if present), and hydrocarbons heavier than methane are selectively adsorbed therein and essentially pure methane flows out of bed A1 through line 155, valve 206, and manifold 158. At this point, valves 202 and 204 are in the closed position. This methane is directed through line 159, pressure control valve 209, and line 16 for distribution through mainifold 169 to one of $CO_2$ adsorber beds B1 to B4. While bed A1 is on its adsorption step, bed A2 (having previously completed its adsorption step) is depressurized countercurrently with respect to the feed direction through valve 203 and the resulting gas passes through line 15 to fuel. At this point, valves 201, 205, and 207 are in the closed position. Next, bed A2 is regenerated by purging countercurrently with respect to the feed direction with product methane introduced from manifold 159 through line 160, pressure reducing valve 208, lines 161 and 157, valve 205, and line 156. Purge gas exits bed A2 and flows through line 154, valve 203 and line 15 to fuel. Next, bed A2 is repressurized by closing valves 203 and 205 and flowing a part of the methane product from manifold 158 through valve 207 and line 156. At this point, bed A2 is subjected to its adsorption step by flowing feed gas from manifold 150 through line 152, valve 201, and line 154 into and through the bed, and withdrawing essentially pure methane product through line 156, valve 207, manifold 158, line 159, and through pressure control valve 209 to line 16. During this portion of the A2 bed cycle, valves 203 and 205 are closed.

At the same time that bed A2 is subjected to its adsorption step, bed A1 is subjected to the steps of depressurization, regeneration by purging, and repressurization as shown in Table 4. When bed A1 has completed its repressurization step and bed A2 has completed its adsorption step, the system again cycles through the steps discussed earlier and which are given in Table 4. A valve sequence chart showing the functions of all valves for the cycle of Table 4 is given in Table 5.

Table 4

| Cycle Sequence for PSA Unit 102 | | |
|---|---|---|
| Time Unit | Bed A1 | Bed A2 |
| 1 | AD | DP |
| 2 | AD | DP |
| 3 | AD | DP |
| 4 | AD | PU |
| 5 | AD | PU |
| 6 | AD | PU |
| 7 | AD | PU |
| 8 | AD | RP |
| 9 | AD | RP |
| 10 | AD | RP |
| 11 | DP | AD |
| 12 | DP | AD |
| 13 | DP | AD |
| 14 | PU | AD |
| 15 | PU | AD |
| 16 | PU | AD |
| 17 | PU | AD |
| 18 | RP | AD |
| 19 | RP | AD |
| 20 | RP | AD |
| AD = Adsorption | | |
| DP = Depressurization | | |
| PU = Purge | | |
| RP = Repressurization | | |

TABLE 5

| VALVE SEQUENCE CHART FOR THE CYCLE OF TABLE 4 | | | | | | | | | |
|---|---|---|---|---|---|---|---|---|---|
| TIME UNIT | VALVE NUMBER (FIGURE 4) | | | | | | | | |
| | 200 | 201 | 202 | 203 | 204 | 205 | 206 | 207 | 208 |
| 1 | O | | | O | | | O | | O |
| 2 | O | | | O | | | O | | O |
| 3 | O | | | O | | | O | | O |
| 4 | O | | | O | | O | O | | O |
| 5 | O | | | O | | O | O | | O |
| 6 | O | | | O | | O | O | | O |
| 7 | O | | | O | | O | O | | O |
| 8 | O | | | | | O | O | | O |
| 9 | O | | | | | O | O | | O |
| 10 | O | | | | | O | O | | O |
| 11 | | O | O | | | | | O | O |
| 12 | | O | O | | | | | O | O |
| 13 | | O | O | | | | | O | O |
| 14 | | O | O | | O | | | O | O |
| 15 | | O | O | | O | | | O | O |
| 16 | | O | O | | O | | | O | O |
| 17 | | O | O | | O | | | O | O |
| 18 | | O | | | O | | | O | O |
| 19 | | O | | | O | | | O | O |
| 20 | | O | | | O | | | O | O |
| O = Open, otherwised closed | | | | | | | | | |

In an alternate mode of operation, this methane purification PSA system comprises three beds with appropriate piping and valving which operate through the cycle steps summarized in Table 5.

The $CO_2$ removal PSA system as shown in Figure 4, which is PSA system 103 of the embodiment in Figure 1, comprises four beds B1, B2, B3, and B4, each of which is packed with an adsorbent selective for $CO_2$ and water. Each of the beds in turn is subjected to the steps of adsorption, equalization, depressurization, regeneration by methane purge, and repressurization. The operations of each bed B1, B2, B3, and B4 during these cyclic steps are shown in Table 6. Since all four beds are subjected in turn to the same cycle of steps, only the steps for bed B1 will be described in detail. Referring to Figure 4, raw synthesis gas after cooling and partial dehydration (line 34, Figure 1) passes through manifold 167, valve 214, and line 166 into and through bed B1. $CO_2$ and water are removed therein by selective adsorption, and synthesis gas product exits bed B1 through line 164, valve 211, and manifold 162. During this step, valves 213, 212, and 210 remain closed. The adsorption step continues for a predetermined time prior to breakthrough of $CO_2$ in the gas product from bed B1. At the end

Table 6

| Cycle Sequence for PSA 103 (Methane Purge) | | | | |
|---|---|---|---|---|
| Time Unit | Bed B1 | Bed B2 | Bed B3 | Bed B4 |
| 1 | AD | ERP | MPU | EDP |
| 2 | AD | RP | MPU | DP |
| 3 | AD | RP | MPU | DP |
| 4 | AD | RP | MPU | DP |
| 5 | AD | RP | MPU | MPU |
| 6 | AD | RP | MPU | MPU |
| 7 | EDP | AD | ERP | MPU |
| 8 | DP | AD | RP | MPU |
| 9 | DP | AD | RP | MPU |
| 10 | DP | AD | RP | MPU |
| 11 | MPU | AD | RP | MPU |
| 12 | MPU | AD | RP | MPU |
| 13 | MPU | EDP | AD | ERP |
| 14 | MPU | DP | AD | RP |
| 15 | MPU | DP | AD | RP |
| 16 | MPU | DP | AD | RP |
| 17 | MPU | MPU | AD | RP |
| 18 | MPU | MPU | AD | RP |
| 19 | ERP | MPU | EDP | AD |
| 20 | RP | MPU | DP | AD |
| 21 | RP | MPU | DP | AD |
| 22 | RP | MPU | DP | AD |
| 23 | RP | MPU | MPU | AD |
| 24 | RP | MPU | MPU | AD |
| AD = Adsorption | | | | |
| EDP = Equalization/Depressurization | | | | |
| DP = Depressurization | | | | |
| MPU = Methane Purge | | | | |
| ERP = Equalization/Repressurization | | | | |
| RP = Repressurization | | | | |

of this adsorption step, valves 214 and 211 are closed, and bed B1 is connected with previously isolated bed B3 by opening valves 212 and 215. Bed B3 is at a lower pressure than bed B1, which causes a net flow of gas from bed B1 to bed B3, thus equalizing the pressures between them. This step is ended before any desorbed $CO_2$ flows from Bed B1. Bed B1 is then depressurized further by closing valve 212 and opening valve 213 which allows void space gas and desorbed components to flow into manifold 165 for recycle to the steam-methane reformer. When bed B1 approaches the pressure in manifold 165, valve 210 is opened, admitting high purity methane from line 16 which flows through bed B1 opposite to the feed direction at a pressure lower than that of the adsorption step and further desorbs $CO_2$ and water. The purge effluent stream comprising methane, $CO_2$, and water exits bed B1 and flows through valve 213 and manifold 165 for recycle to reformer feed. When regeneration is complete, valves 210 and 213 are closed and valves 212 and 215 are opened, connecting beds B1 and previously isolated B3. Prior to this, bed B3 had completed its adsorption cycle and thus is now at a higher pressure than bed B1. This causes void space gas to flow from bed B3 into bed B1 thus equalizing the pressure between them. Finally, valves 212 and 215 are closed and valve 211 is opened, thus repressurizing bed B1 with synthesis gas product from manifold 162. At this point the cycle repeats for bed B1 as shown in Table 6.

As stated earlier, beds B2, B3, and B4 undergo in turn the steps discussed above in the cycle shown in Table 6. This is accomplished by controlling the valves associated with beds B2, B3, and B4 as shown in

13

the valve sequence chart of Table 7.

## VALVE SEQUENCE FOR THE CYCLE OF TABLE 5

VALVE NUMBER (FIGURE 4)

| TIME UNIT | 210 | 211 | 212 | 213 | 214 | 215 | 216 | 217 | 218 | 219 | 220 | 221 | 222 | 223 | 224 | 225 | 226 | 227 | 228 | 229 |
|---|---|---|---|---|---|---|---|---|---|---|---|---|---|---|---|---|---|---|---|---|
| 1 | | O | | | O | | | O | | | | O | | O | | | | O | | |
| 2 | | O | | | O | O | | | | | | O | | O | | | | | O | |
| 3 | | O | | | O | O | | | | | | O | | O | | | | | O | |
| 4 | | O | | | O | O | | | | | | O | | O | | | | | O | |
| 5 | | O | | | O | O | | | | | | O | | O | | | O | | O | |
| 6 | | O | | | O | O | | | | | | O | | O | | | O | | O | |
| 7 | | | | O | | O | | | | O | | | O | | | | O | | O | |
| 8 | | | O | O | | O | | | | O | O | | | | | | O | | O | |
| 9 | | | | O | | O | | | | O | O | | | | | | O | | O | |
| 10 | | | | O | | O | | | | O | O | | | | | | O | | O | |
| 11 | | | | O | | O | | | | O | O | | | | | | O | | O | |
| 12 | O | | | O | | O | | | | O | O | | | | | | O | O | | |
| 13 | O | | | O | | | | O | O | | O | | | | O | O | | | | |
| 14 | O | | | O | | | | | O | | O | | | | O | O | | | | |
| 15 | O | | | O | | | | | O | | O | | | | O | O | | | | |
| 16 | O | | | O | | | | | O | | O | | | | O | O | | | | |
| 17 | O | | | O | | | O | | O | | O | | | | O | O | | | | |
| 18 | O | | | | | | O | | O | | O | | | | O | O | | | | |
| 19 | | | O | | | | O | | O | | | | O | O | | O | | | | O |
| 20 | | O | | | | | O | | O | | | | | O | | O | | | | O |
| 21 | | O | | | | | O | | O | | | | | O | | O | | | | O |
| 22 | | O | | | | | O | | O | | | O | | O | | O | | | | O |
| 23 | | O | | | | | O | | O | | | O | | O | | O | | | | O |
| 24 | | | | | | | O | | | | | | | | | | | | | O |

O=Open, otherwise closed

In the second embodiment of the invention as shown in Figure 2, and as earlier discussed, synthesis gas product from PSA unit 103 is further separated into hydrogen and carbon monoxide, and the hydrogen is further purified in PSA unit 111. PSA unit 102 in this embodiment operates in exactly the same manner as discussed earlier and as shown in the cycle sequence of Table 4 and thus no further discussion of PSA unit 102 is necessary. Turning now to PSA unit 103, a process flow diagram is given in Figure 5 for the second embodiment of the invention earlier discussed with reference to Figure 2. In Figure 5, the PSA unit comprising beds B1 to B4 is identical to that discussed previously in Figure 4, except that manifold 168 and valves 230, 231, 232, and 233 have been added to supply cryogenic separation unit reject gas, comprising methane and carbon monoxide, as an additional purge stream.

The PSA system 103 for $CO_2$ removal shown in Figure 5 comprises four beds B1, B2, B3, and B4, each of which is packed with an adsorbent selective for $CO_2$ and water. Each of the beds in turn is subjected to the steps of adsorption, equalization, depressurization, purge with methane, purge with reject gas from the cryogenic separation unit, and repressurization. The relationship of the steps for each bed B1, B2, B3, and B4 during these cyclic steps are shown in Table 8.

Table 8

| Cycle Sequence for PSA Unit 103 (Methane/Reject Gas Purge) | | | | |
|---|---|---|---|---|
| Time Unit | Bed B1 | B2 | B3 | B4 |
| 1 | AD | ERP | MPU | EDP |
| 2 | AD | RP | MPU | DP |
| 3 | AD | RP | MPU | DP |
| 4 | AD | RP | MPU | DP |
| 5 | AD | RP | RPU | MPU |
| 6 | AD | RP | RPU | MPU |
| 7 | EDP | AD | ERP | MPU |
| 8 | DP | AD | RP | MPU |
| 9 | DP | AD | RP | MPU |
| 10 | DP | AD | RP | MPU |
| 11 | MPU | AD | RP | RPU |
| 12 | MPU | AD | RP | RPU |
| 13 | MPU | EDP | AD | ERP |
| 14 | MPU | DP | AD | RP |
| 15 | MPU | DP | AD | RP |
| 16 | MPU | DP | AD | RP |
| 17 | RPU | MPU | AD | RP |
| 18 | RPU | MPU | AD | RP |
| 19 | ERP | MPU | EDP | AD |
| 20 | RP | MPU | DP | AD |
| 21 | RP | MPU | DP | AD |
| 22 | RP | MPU | DP | AD |
| 23 | RP | RPU | MPU | AD |
| 24 | RP | RPU | MPU | AD |
| AD = Adsorption | | | | |
| EDP = Equalization/Depressurization | | | | |
| DP = Depressurization | | | | |
| MPU = Methane Purge | | | | |
| RPU = Cryogenic Reject Gas Purge | | | | |
| ERP = Equalization/Repressurization | | | | |
| RP = Repressurization | | | | |

Since each of the four beds is subjected in turn to the same cycle of steps, only the steps for bed B1 will be described in detail. Referring to Figure 5, raw synthesis gas after cooling and dehydration is brought to bed B1 through manifold 167, valve 214, and line 166. The steps of adsorption, equalization, depressurization, and purge by high purity methane occur exactly the same as discussed earlier for the first embodiment of the invention shown in Figure 1 and Table 6. At the completion of the methane purge step of bed B1, valve 210 is closed and valve 230 is opened, and reject gas comprising methane and carbon monoxide from the cryogenic separation unit via manifold 168 is passed through bed B1 opposite to the feed direction at a pressure lower than that of the adsorption step. Purge effluent from the bed comprising void space gas from the previous step, additional desorbed $CO_2$ and water, as well as some carbon monoxide, pass through valve 213 and manifold 165 for recycle to reformer feed. At this point, valves 230 and 213 are closed and valves 212 and 227 are opened, and the remaining steps of equalization and repressurization continue exactly as discussed earlier for the first embodiment of the invention.

EP 0 411 506 A2

In the adsorption cycles discussed above and illustrated in Figures 4 and 5 and Tables 4, 6, and 8, two beds are utilized for PSA system 102 and four beds for PSA system 103. It is possible to utilize a greater number of beds in alternate cycle configurations. For example, three beds can be utilized in PSA system 102 and six beds in PSA system 103, depending on actual process conditions and requirements.

PSA unit 111 of Figure 2 further purifies the hydrogen stream 42 from the cryogenic separation unit 110. This PSA unit can utilize any one of several previously disclosed hydrogen purification PSA cycles, one of which for example is disclosed in the earlier cited U.S. Pat. No. 4,077,779. The cycle disclosed in this patent utilizes a plurality of parallel beds of activated carbon each of which in turn undergoes the following sequence of steps:

(a) adsorption, in which a hydrogen-rich stream is passed through an adsorbent bed which adsorbs the impurities present and yields a high-purity hydrogen product;

(b) purging at the adsorption pressure with one or more of the impurity components primarily collected in earlier adsorption steps;

(c) depressurizing the column and withdrawing impurity components;

(d) purging the bed at reduced pressure with an extraneous gas to remove most of the remaining impurities from the bed;

(e) evacuating the bed to a subatmospheric pressure to remove residual impurity components; and

(f) pressurizing the bed to the pressure of step (a) with hydrogen product, so that another cycle can be repeated. The cycle disclosed in previously-cited U.S. Pat. No. 3,986,849 can also be utilized in PSA unit 111.

In the third embodiment of the invention as shown in Figure 3, and as earlier discussed, raw synthesis gas is passed through one or more stages of water gas shift to convert contained carbon monoxide into additional hydrogen and $CO_2$. PSA unit 103 in this embodiment purifies hydrogen by removing $CO_2$ and water, after which further purification may be accomplished in methanator 130. PSA systems 102 and 103 for this embodiment are shown in the flow diagram of Figure 4. Gas from low temperature shift enters the $CO_2$ removal PSA system through manifold 167 and hydrogen product leaves the unit through manifold 162. All operating steps and cycles for the PSA systems 102 and 103 in this embodiment are the same as those previously discussed for the first embodiment as shown in Figure 4 and Table 6.

The time units given for the cycle sequences of PSA units 102 and 103 in Tables 4 through 8 are each typically 1 to 2 minutes in length, although other time lengths may be used if necessary. PSA systems 102 and 103 can utilize adsorbents selected from commercially available materials such as activated carbon, zeolite, alumina, and silica gel. For PSA system 102, activated carbon is a preferred adsorbent. For PSA system 103, a zeolite adsorbent, for example a NaX zeolite, is preferred in the present invention.

A common feature in the three key embodiments of the present invention is the use of a gas stream or streams other than the PSA product or void space gas rich in the desired product for the purge step of the $CO_2$ PSA system 103. This PSA system removes $CO_2$ and residual water from raw or shifted synthesis gas in the three embodiments as previously discussed. It will be recalled that in the first embodiment a stream of dry, essentially $CO_2$-free methane is used to desorb $CO_2$ and water in the purge step wherein the methane flows through the bed in a direction opposite to the feed direction at a pressure lower than that of the adsorption step, and the resulting purge effluent stream is recycled as feed to the synthesis gas generating step, which for example can be a steam-methane reformer. In the second embodiment, an additional purge step using reject gas (essentially methane and carbon monoxide) is utilized following the methane purge step. All purge effluent is recycled as feed to the synthesis gas generating step. In the third embodiment, methane is used for purge and the purge effluent is recycled to the synthesis gas generating step as fuel.

Many previously disclosed PSA systems for purifying hydrogen, some of which are widely used in commercial operating plants, utilize product hydrogen and/or hydrogen-rich void space gas from another bed for purging impurity-laden beds of adsorbent. Previously cited U.S. Patent Nos. 3,221,476, 3,986,849, and 4,732,596, for example, disclose such a purge step. Other hydrogen PSA systems which use gas streams other than PSA product and/or hydrogen-rich void space gas from another bed for purging have been disclosed, for example, in previously-cited U.S. Patent Nos. 3,221,476, 3,4077,779, 4,375,363, 4,732,596, and 4,761,167, and Japanese Patent No. 62,036,003. In these disclosures, the gas streams utilized for PSA purge are supplied from sources external to and not integrated with the disclosed processes, or are supplied from internally-generated streams in an integrated process which includes the PSA system.

In U.S. Patent No. 4,475,929, discussed previously, methane or natural gas is used for cocurrent high-pressure purge of the PSA system which produces ammonia synthesis gas. The purge effluent is used as fuel in the raw synthesis gas generation step or elsewhere.

In contrast with the sources of PSA purge used in these earlier disclosures, a key feature in the embodiments of the present invention is the use of a treated portion of the feed stream to the integrated process, i.e. methane stream 16 in Figures 1, 2 and 3, for purging the $CO_2$ removal PSA system 103. In an alternate embodiment, as discussed earlier, the methane-carbon monoxide stream 46 from the cryogenic separation system 110 is used at least in part to purge PSA system 103, in addition to the use of methane stream 16 for this purge step.

Several advantages are realized by utilizing methane or methane plus carbon monoxide for purging, as in the present invention, rather than hydrogen or a hydrogen-rich stream as used in previous hydrogen or synthesis gas PSA systems. The most important of these advantages is that the purge effluent stream of the present invention (stream 18 in Tables 1 and 2) contains much less hydrogen than corresponding prior art PSA purge effluent streams. Purge effluent streams containing significant amounts of hydrogen are generally not recycled as feed to the synthesis gas generation step, but rather are used as fuel. The effluent purge stream of the present invention, in contrast, can be recycled as feed to the synthesis gas generation step. This is particularly advantageous for example in the case of steam-methane reforming because the carbon dioxide in the recycled purge effluent stream promotes reaction (1)

$$CH_4 + CO_2 \rightleftharpoons 2CO + 2H_2 \qquad (1)$$

and thus increases the utilization of valuable methane feedstock.

Significant amounts of hydrogen in the purge effluent stream if recycled would inhibit reaction (1) and also would Inhibit the other important reactions (2), (3), and (4)

$$CH_4 + H_2O \rightleftharpoons CO + 3H_2 \qquad (2)$$
$$CH_4 + 2H_2O \rightleftharpoons CO_2 + 4H_2 \qquad (3)$$
$$CO + H_2O \rightleftharpoons CO_2 + H_2 \qquad (4)$$

which occur in steam methane reforming . The use of methane or methane plus carbon monoxide for PSA purging in the present invention thus promotes the more efficient utilization of valuable methane feedstock and maximizes the recovery of valuable hydrogen product when compared with prior art PSA systems which use hydrogen-rich streams for purging.

The operation of the PSA system of the present invention using methane or methane and carbon monoxide purge is also more efficient than prior art PSA cycles in which regeneration of $CO_2$-laden adsorbent beds includes vacuum desorption. The power requirement for the operation of a PSA system according to the present is less than that of adsorption processes disclosed in previously-cited U.S. Patent Nos. 3,221,476 and 4,077,779 or of other such systems utilizing vacuum regeneration.

The present invention is described in the examples and embodiments herein chiefly for the recovery of valuable products from raw synthesis gas generated by the steam reforming of methane. However, the present invention can also be utilized with alternate synthesis gas generation processes, such as partial oxidation or autothermal reforming of hydrocarbons, or the gasification of solid carbonaceous materials such as coal or petroleum coke.

## Claims

1. A method for the production of hydrogen, carbon monoxide, or combinations thereof from a feed gas mixture containing hydrogen, carbon monoxide, carbon dioxide, water, and optionally one or more additional components as impurities, the process comprising the sequential steps of:

(1) passing said feed gas mixture at a superatmospheric pressure into and through a first bed of adsorbent which selectively adsorbs carbon dioxide and water, and withdrawing therefrom a hydrogen-containing gas essentially free of water and carbon dioxide;

(2) purging said first bed of adsorbent with a stream of essentially pure methane at a pressure lower than the pressure of step (1), whereby components adsorbed in step (1) are desorbed, and withdrawing therefrom a first purge effluent stream comprising methane, void space gas, and said desorbed components.

2. The method as recited in Claim 1 wherein said feed gas mixture is obtained by:

(a) reforming a desulfurized, methane-containing feed stream to produce a raw synthesis gas at an elevated temperature and superatmospheric pressure containing hydrogen, carbon monoxide, carbon dioxide, and water as major components and optionally containing said one or more additional components as impurities;

(b) cooling said raw synthesis gas whereby a portion of said water is condensed, and

(c) removing said condensed water from said cooled raw synthesis gas to yield said feed gas mixture for passing through said first bed of adsorbent;

and wherein said hydrogen-containing gas withdrawn from said first bed of adsorbent is a synthesis gas product containing hydrogen and carbon monoxide, which is essentially free of water and carbon dioxide, and which optionally contains said one or more additional components as impurities.

3. The method as recited in Claim 2 wherein at least a portion of said first purge effluent stream is recycled and combined with said desulfurized methane-containing feed stream.

4. The method as recited in Claim 2 wherein said raw synthesis gas is produced by (A) mixing a stream of desulfurized natural gas with at least a portion of said first purge effluent stream from said first bed of adsorbent; (B) heating the resulting mixed stream and mixing it with steam; (C) further heating the resulting steam-containing stream; (D) mixing a remaining portion of said first purge effluent stream with said steam-containing stream to form said desulfurized, methane-containing feedstream; and (E) reforming said desulfurized, methane-containing feedstream in a steam methane reformer reactor.

5. The method as recited in Claim 2 wherein said essentially pure methane is obtained by passing a stream of desulfurized natural gas through a pretreatment pressure swing adsorption system comprising multiple beds of adsorbent selective for the retention of components in said natural gas which are more strongly adsorbed than methane, and withdrawing therefrom a stream of said essentially pure methane and a waste stream comprising methane, void space gas, and desorbed components.

6. The method as recited in Claim 2 wherein said essentially pure methane used for said purging step is supplied by the vaporization of liquefied natural gas.

7. The method as recited in Claim 2 wherein said first bed of adsorbent is one of a group of multiple parallel beds of adsorbent selective for carbon dioxide and water, and further wherein each bed of said group of beds undergoes in turn the sequence of steps comprising:

(a) passing said feed gas mixture at said superatmospheric pressure into and through said bed of adsorbent wherein carbon dioxide and water are selectively adsorbed, and withdrawing therefrom said synthesis gas product which is essentially free of water and carbon dioxide and which contains hydrogen, carbon monoxide, and optionally said one or more additional components present in said feed gas mixture as impurities;

(b) depressurizing said bed to an intermediate pressure by connecting it with an alternate parallel bed initially at a lower pressure, whereby gas flows from said bed into said alternate parallel bed, thus equalizing the pressures in the two beds;

(c) further depressurizing said bed, whereby portions of adsorbed carbon dioxide and water are desorbed and are withdrawn from said bed along with void space gas;

(d) purging said bed with said stream of essentially pure methane, whereby additional portions of adsorbed carbon dioxide and water are desorbed, and are purged from said bed along with remaining void space gas in said first purge effluent stream;

(e) repressurizing said bed to said intermediate pressure by connecting said bed with said alternate parallel bed which has completed its adsorption step and is at a pressure higher than said bed, whereby gas from said alternate parallel bed flows into said bed, thus equalizing the pressures in the two beds; and

(f) further repressurizing said bed to the pressure of adsorption step (a) by introducing thereinto a portion of said synthesis gas product.

8. The method as recited in claim 2 wherein said raw synthesis gas is produced at a pressure between about 100 and 400 psig, and is cooled to about $100^{\circ}$ F before flowing into said first bed of adsorbent.

9. The method as recited in Claim 2 further comprising the separation of said synthesis gas product into hydrogen and carbon monoxide by the additional steps of:

(3) introducing said synthesis gas product into a cryogenic separation system and withdrawing therefrom a high-purity carbon monoxide product, a hydrogen stream containing carbon monoxide and a portion of said one or more additional impurity components present at low concentration in said synthesis gas product, and a first reject stream containing methane and carbon monoxide;

(4) passing said hydrogen stream into a hydrogen pressure swing adsorption system comprising multiple parallel beds of adsorbent selective for retention of carbon monoxide and said impurity components contained therein, wherein said carbon monoxide and impurity components are separated from hydrogen by selective adsorption, and withdrawing therefrom a high-purity hydrogen product and a second reject stream containing hydrogen, carbon monoxide, and said impurity components;

(5) recycling said second reject stream to said cryogenic separation system by combining it with said synthesis gas product in step (3); and

(6) following said purge step (2), further purging said first bed of adsorbent with at least a portion of said first reject stream, whereby additional components adsorbed in step (1) are desorbed, and withdrawing therefrom a second purge effluent stream containing methane, carbon monoxide, void space gas, and said desorbed components.

18

10. The method as recited in Claim 9 wherein at least a portion of said first purge effluent stream, at least a portion of said second purge effluent stream, and optionally a remaining portion of said first reject stream are recycled and combined with said desulfurized methane-containing feed stream .

11. The method as recited in Claim 9 wherein said raw synthesis gas is produced by (A) mixing a stream of desulfurized natural gas with at least a portion of said first purge effluent stream from said first bed of adsorbent; (B) heating the resulting mixed stream and mixing it with steam; (C) further heating the resulting steam-containing stream; (D) mixing a remaining portion of said first purge effluent stream with said steam-containing stream to form said desulfurized, methane-containing feedstream; and (E) reforming said desulfurized, methane-containing feedstream in a methane reformer reactor.

12. The method as recited in Claim 9 wherein said essentially pure methane is obtained by passing a stream of desulfurized natural gas through a pretreatment pressure swing adsorption system comprising multiple beds of adsorbent selective for the retention of components in said natural gas which are more strongly adsorbed than methane, and withdrawing therefrom said stream of essentially pure methane and a waste stream containing methane and desorbed components.

13. The method as recited in Claim 9 wherein said stream of essentially pure methane used for said purging step is supplied by the vaporization of liquefied natural gas.

14. The method as recited in Claim 9 wherein said first bed of adsorbent is one of a group of multiple parallel beds of adsorbent selective for carbon dioxide and water, and further wherein each bed of said group of beds undergoes in turn the sequence of steps comprising:

(a) passing said cooled and substantially dried feed gas mixture at said superatmospheric pressure into and through said bed of adsorbent wherein carbon dioxide and water are selectively adsorbed, and withdrawing therefrom said synthesis gas product which is essentially free of water and carbon dioxide and which contains hydrogen, carbon monoxide, and optionally minor amounts of one or more additional components present in said feed gas mixture;

(b) depressurizing said bed to an intermediate pressure by connecting it with an alternate parallel bed initially at a lower pressure, whereby gas flows from said bed into said alternate parallel bed, thus equalizing the pressures in the two beds;

(c) further depressurizing said bed, whereby portions of adsorbed carbon dioxide and water are desorbed and are withdrawn from said bed along with void space gas;

(d) purging said bed with said essentially pure methane, whereby additional portions of adsorbed carbon dioxide and water are desorbed, and are purged from said bed along with remaining void space gas in said first purge effluent stream;

(e) repressurizing said bed to said intermediate pressure by connecting said bed with said alternate parallel bed which has completed its adsorption step and is at a pressure higher than said bed, whereby gas from said alternate parallel bed flows into said bed, thus equalizing the pressures in the two beds; and

(f) further repressurizing said bed to the pressure of adsorption step (a) by introducing thereinto a portion of synthesis gas product.

15. The method as recited in Claim 9 wherein said raw synthesis gas is produced at between about 100 and 400 psig, and is cooled to about 100° F before flowing into said first bed of adsorbent.

16. The method as recited in claim 1 wherein said feed gas mixture is obtained by:

(a) reforming a stream of desulfurized natural gas to produce a raw synthesis gas at an elevated temperature and superatmospheric pressure containing hydrogen, carbon monoxide, carbon dioxide, and water, and optionally containing said one or more additional components as impurities;

(b) cooling said raw synthesis gas and subjecting it to one or more stages of catalytic water gas shift conversion, whereby said carbon monoxide is converted into additional hydrogen and carbon dioxide;

(c) cooling the resulting shifted synthesis gas whereby a portion of said water is condensed; and

(d) removing said condensed water to yield said feed gas mixture for passing through first bed of adsorbent;

and wherein said hydrogen-containing gas withdrawn from said first bed of adsorbent is a hydrogen product which is essentially free of water and which contains up to about 0.5 vol% carbon monoxide, optionally said one or more additional components as impurities, and optionally up to about 100 ppmv of carbon dioxide.

17. The method as recited in Claim 16 wherein said raw synthesis gas is produced by steam methane reforming of said desulfurized natural gas stream, and further wherein said first purge effluent stream is used as fuel in said steam methane reforming step.

18. The method as recited in Claim 16 wherein said water gas shift conversion comprises a high-temperature shift reaction step at about 850° F, a cooling step, a low-temperature shift reaction step at about 500° F.

19. The method as recited in claim 16 wherein said first bed of adsorbent is one of a group of multiple parallel beds of adsorbent selective for carbon dioxide and water, and further wherein each bed of said group of beds undergoes in turn the sequence of steps comprising:

(a) passing said feed gas mixture at said superatmospheric pressure into and through said bed of adsorbent wherein carbon dioxide and water are selectively adsorbed, and withdrawing therefrom said hydrogen product;

(b) depressurizing said bed to an intermediate pressure by connecting it with an alternate parallel bed initially at a lower pressure, whereby gas flows from said bed into said alternate parallel bed, thus equalizing the pressure between the two beds;

(c) further depressurizing said bed, whereby portions of adsorbed carbon dioxide and water are desorbed and are withdrawn from said bed along with void space gas;

(d) purging said bed with said stream of essentially pure methane, whereby additional portions of said adsorbed carbon dioxide and water are desorbed, and are purged from said bed along with remaining void space gas in said first purge effluent stream;

(e) repressurizing said bed to said intermediate pressure by connecting it with said alternate parallel bed which has completed its adsorption step and is at a pressure higher than said bed, whereby gas from said alternate parallel bed flows into said bed, thus equalizing the pressures in the two beds, and

(f) further repressurizing said bed to the pressure of the adsorption step (a) by introducing thereinto a portion of said hydrogen product.

20. The method as recited in Claim 16 wherein said raw synthesis gas is produced at between about 100 and 400 psig, and is cooled to about 100°F before flowing into said first bed of adsorbent.

21. The method as recited in Claim 19 wherein said stream of essentially pure methane is obtained by passing a stream of desulfurized natural gas through a pretreatment pressure swing adsorption system comprising multiple beds of adsorbent selective for the retention of components in said natural gas which are more strongly adsorbed than methane, and withdrawing therefrom said stream of essentially pure methane and a waste stream comprising methane and desorbed components.

22. The method as recited in Claim 16 wherein said stream of essentially pure methane used for said purging step is supplied by the vaporization of liquefied natural gas.

23. The method as recited in Claim 16 wherein said hydrogen product is passed through a catalytic methanation reactor whereby said carbon monoxide, and if present carbon dioxide, are reacted with a portion of said hydrogen to form methane and water, thereby yielding a carbon oxide-free hydrogen product.

24. The method as recited in Claim 23 wherein said hydrogen product is heated prior to said catalytic methanation reactor by indirect heat exchange with a partially-shifted raw synthesis gas stream obtained from said water gas shift conversion step at about 850°F, and further wherein said carbon oxide-free hydrogen product from said methanation reactor is cooled by indirect heat exchange with said hydrogen product stream.

FIG. 1

FIG.2

EP 0 411 506 A2

**FIG. 3**

**FIG. 4**

FIG.5

NATURAL GAS FEED

FUEL

A1 A2 NATURAL GAS PRETREATMENT ADSORBERS 102

167 RAW SYNTHESIS GAS

214
166 165 213
TO REFORMER FEED

B1 B2 B3 B4 CO2 REMOVAL ADSORBERS 103

231 232 233 FROM CRYOGENIC SEPARATION UNIT
230 168 227
164 212 CO/CH4

CH4 16
210

TO CRYOGENIC SEPARATION UNIT
H2/CO

EP 0 411 506 A2